# EUROPEAN PATENT APPLICATION

(11) **EP 1 107 619 A2**
(43) Date of publication of application: **13.06.2001**
(21) Application number: 00307835.9
(22) Date of filing: 11.09.2000
(51) Int. Cl.: H04Q 7/22, H04L 12/56

(54) **Multi-polling system for GPRS**

(30) Priority: 10.12.1999 EP 99309993
(71) Applicant: LUCENT TECHNOLOGIES INC., Murray Hill, New Jersey 07974-0636 (US)
(72) Inventor: Demetrescu, Cristian, Twickenham, Middlesex TW2 5LY (GB); Ilas, Constantin, Swindon, Wiltshire SN5 7BB (GB); Samaras, Kostas, Swindon, Wiltshire SN2 2HL (GB); Samuel, Louis Gwyn, Swindon, Wiltshire SN2 3YG (GB); Somerville, Fiona Clare, Millbrook Place, Bath BA2 4JY (GB); Wu, Jian Jun, Reading, Berkshire (GB); Yan, Ran-Hong, Faringdon, Oxfordshire SN7 7SS (GB)
(74) Representative: Buckley, Christopher Simon Thirsk

(57) **Abstract**

A mobile telephone network operating general packet radio service includes a base station (2) and a group of mobile telephones (M1 to M8).

The base station (2) includes a control unit which generates a succession of data packets which are transmitted along a common downlink to all the mobiles (M1 to M8).

Each data packet includes a header section containing an uplink state flag identifying a first selected mobile, to poll that mobile and cause it to return a packet of data to the base station along a common downlink channel. The header also includes an uplink state flag identifying a second selected mobile and is accompanied by the identity of and time slot for a second auxiliary uplink channel for polling the second mobile to cause the second mobile to return a packet of data to the base station along said auxiliary uplink channel thereby enabling the polling of at least two mobiles using the same data packet.

## Description

### Field of the Invention

The present invention relates to data transmission systems, and in particular to mobile telephone networks employing such systems, and to base stations and satellite stations for use in such systems.

### Background of the Invention

In a mobile telephone network, there are a plurality of base stations serving different areas. Each base station is arranged to communicate with a plurality of mobile telephones in an associated area.

The base station communicates with the mobile telephones using a discrete number of channel frequencies. The mobile telephones are typically arranged in groups of eight with the base station sending signals to all the members of the group along a common downlink channel having one unique frequency allocated to that group. The base station receives signals from each of the mobile telephones in the group along an uplink channel having a different unique frequency allocated to that group.

In operation, the base station sends data to all the mobile telephones of each group in a succession of data packets along the common downlink channel. Each packet of data consists of two parts. A first part called a header which contains a code ID identifying a selected mobile of the group and an uplink state flag (USF) for that mobile to trigger that mobile to return a packet of data to the base station and a second part containing a payload of data that the mobile telephone will download and use as required. The header is "transparent", that is it can be read by all the telephones in the group. The payload is cyphered and can only be read and downloaded by the telephone whose ID is contained in the header. The packets are typically of 20ms in duration and, when a particular telephone downloads a packet containing its uplink state flag, that telephone will reply very shortly after receiving the packet by sending a packet of data back to the base station along the common uplink channel.

If each mobile telephone only receives one uplink state flag (ie is polled) during each cycle of eight successive packets of data transmitted by the base station, it can only send data to the base station during one 20ms period in every eight.

It is an object of the invention to provide an improved polling rate.

### Summary of the Invention

According to one aspect of this invention there is provided a data transmission system comprising a base station having a radio transmitter and a receiver and a plurality of satellite stations each having a radio transmitter and a receiver, the transmitter of the base station and the receivers of the satellite stations all being tuned to the same downlink channel, and the transmitters of the satellites and the receiver of the base station all being tuned to a common uplink channel and at least one auxiliary uplink channel, the base station including control means for generating a succession of data packets and transmitting them to the satellites, each data packet comprising a header section and a payload section, the header section basis of variable configuration and length and containing a first uplink state flag identifying with a first selected satellite which when received by the first selected satellite causes that satellite alone to send a data packet back to the base station along the uplink channel, and at least one second uplink state flag identifying a second selected satellite coupled with the identity of and time slot for, a said auxiliary uplink channel to cause the said second selected satellite alone to send a data packet back to the base station along said auxiliary uplink channel in said time slot, whereby to effect multi-polling of said satellites using a single packet of data.

According to another aspect of this invention there is provided a base station having a radio transmitter and a receiver for communication with a plurality of satellite stations, the transmitter being tuned to a predetermined downlink channel, and the receiver being tuned to a predetermined uplink channel and at least one auxiliary uplink channel, the base station including control means for generating a succession of data packets and transmitting them to the satellite stations each data packet comprising a header section and a payload section, the header section being of variable configuration and length and containing a first uplink state flag identifying with a first selected satellite station and at least one second uplink state flag identifying a second selected satellite station coupled with the identity of and time slot for, a said auxiliary uplink channel whereby to effect multi-polling of said satellite station using a single packet of data.

According to a further aspect of this invention there is provided a satellite station with a unique identity having a radio transmitter and a receiver, the receiver being tuned to a predetermined downlink channel, and the transmitter being tuned to a predetermined uplink channel and at least one auxiliary uplink channel, the satellite station including control means for receiving from a base station a succession of data packets, each data packet comprising a header section and a payload section, the header section being of variable configuration and length and containing a first uplink state flag carrying the identity of a first selected satellite station which if that identity corresponds with the said unique identity causes the control means to send a data packet back to the base station along the predetermined uplink channel, and at least one second uplink state flag carrying the identity of a second selected satellite station coupled with the identity of and time slot for, a said auxiliary uplink channel which if that identity corresponds with said unique identity causes the control means to send a data packet back to the base station along said auxiliary uplink channel in said time slot, whereby said satellite station is multi-polled using a single packet of data.

### Brief Description of the Drawings

A mobile telephone network embodying the present invention, will now be described, by way of example, with reference to the accompanying drawings, in which:
Figure 1 is a block diagram of a base station communicating with a plurality of mobile telephones; and
Figure 2 is a diagram illustrating the composition of a data packet.

### Description of the Preferred Embodiment

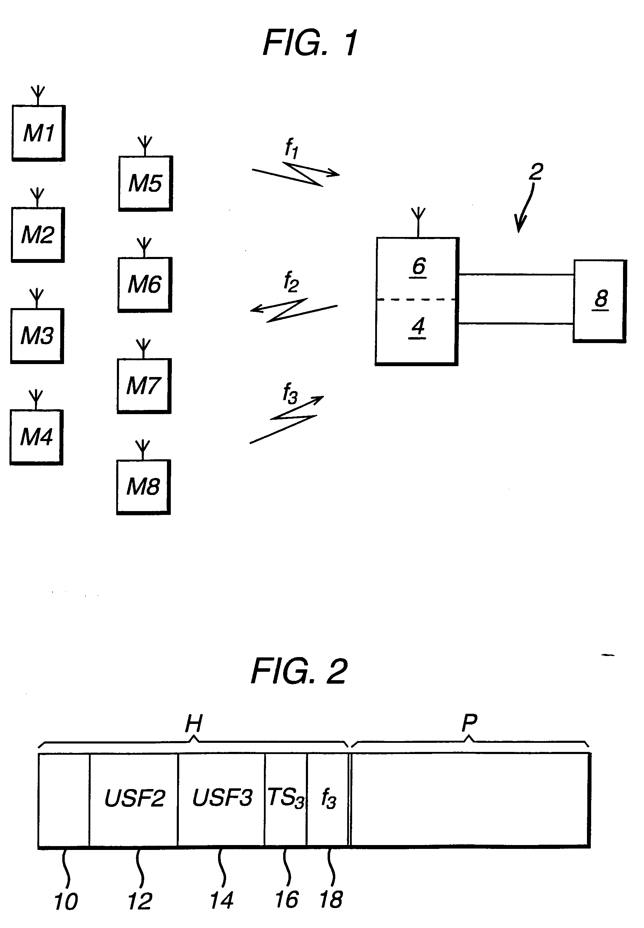

As shown in Figure 1, a base station 2 includes a radio transmitter 4 and receiver 6 for transmitting data simultaneously to a group of eight satellites or mobile telephones M1 to M8 along a downlink channel of frequency f₂ and for receiving data principally along an uplink channel of frequency f₁.

The signals generated by a control unit 8 and transmitted by the base station 2 consist of a series of packets of a data each of 20ms duration.

As shown in Figure 2, each data packet includes a header H and a payload P. The header includes a mode slot 10 to be described in more detail hereinafter, a primary uplink state flag slot 12 containing, for example, the uplink state flag USF2 for mobile M2 and a secondary uplink state flag slot 14 containing, for example, the uplink state flag USF3 for the mobile M3. The secondary uplink state flag slot is followed by a time slot 16 and a frequency slot 18 defining, for example, a time slot T3 in an auxiliary uplink channel of frequency f₃. The payload P then follows.

In operation, when the mobile telephone M2 receives the packet, it responds to the uplink state flag USF2 to transmit a packet of data along the default uplink channel of frequency f₁. When the mobile telephone M3 receives the same packet of data, it responds to the uplink state flag USF3 to transmit a packet of data in a specific time slot TS₃ along the auxiliary uplink channel of frequency f₃.

In this way, the base station can receive two data packets from two mobile telephones in response to the same packet of data sent along the downlink channel. To achieve this situation, the duration of the header H will have been increased at the expense of the duration of the payload P since, for a given system, standards dictate that the packets should all be of the same duration.

While the auxiliary uplink channel has been defined as having a frequency of f₃, it will be appreciated, that the base station may have a number of other channels of different frequency available for use as an auxiliary uplink channel. The base station may therefore select different auxiliary uplink channels on different occasions according to availability.

Also, while each packet is shown as containing a secondary uplink state flag, it may include a tertiary uplink state flag or more each accompanied by its own time and frequency slots. However, such additional uplink state flags will reduce the duration of the payload and produce progressively diminishing returns.

The above described polling method will be referred to hereinafter as multi-polling.

The advantage that pure polling has over contention based access for real time (RT) traffic channels lies in the determinism of the access delay. In polling the access delay is deterministic whereas in contention based access the access delay is stochastic and therefore more damaging to RT traffic. However, as system load increases the polling algorithm has to find channel space in order to accommodate positive replies from the polled mobiles. Whereas in contention based access there is a known common pool of available channels that the mobiles contend for.

### Contention based:

As the load increases an increasing number of mobiles contend for a diminishing number of spare (unused/multiplexed) channels. This means that the probability of failure to acquire a channel will increase as the load increases resulting in dropped calls - gaps in speech. The onus on obtaining the channel is down to the mobile, ie the mobile being successful.

### Polling based:

As the load increases the problem is not one of contending for spare time slots but finding them rapidly enough in order to give the mobile a channel. The effect of not finding a channel would be the same as that encountered in the contention based case. The onus on obtaining the channel is down to the base station controller (BSC) ie the BSC being successful.

In order to cope with the transitional behaviour required by the polling algorithm to cope with increasing load we employ fuzzy techniques that utilise the following general rules

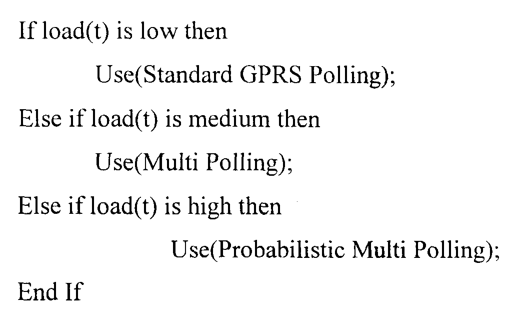

The mode slot 10 in the header is used to identify to the mobiles being polled which, of the option is being employed by the base station.

When adopting standard GPRS (General Packet Radio Service) Polling - the standard GPRS MAC (General Packet Radio Service Medium Access Control) header is used to poll mobiles, up to two mobiles camped on each time slot.

When adopting multi polling - the standard GPRS MAC header does not render sufficient flexibility in order to obtain the multiplexing gains. Thus, multi polling permits more than one mobile to be polled in each time slot with a dedicated reply channels being signalled in the MAC header.

Probabilistic multi polling is adopted when approaching the load limit of the cell. In this technique we employ two statistical methods in order for the replying mobile to gain access in a fair manner to the remaining channels.
1. The statistical nature of speech ie its exponential decay gives the probability (P) that a channel is active at time _{*t*} is given by *p*(*t*)=_{*e*}-*βt* and the probability (Q) of remaining on at time _{*t*} is given by *Q*(*t*) = 1-*e*⁻^{*βt*}. Where _{*B*} is ...
2. Contention is then used on the reply channels, ie the mobiles have look for space (time slots) in different frequencies reply channels and then contend with other mobiles for it.

In the first case the elapsed time that a call has been in an active phase in order to select a channel for reply. In this way the channel for reply under high load conditions is taken from those channels that have been in their active phase the longest and therefore the most likely to become inactive the soonest. In the second case the mobiles reply time slots are grouped to allow the mobiles to contend for a reply channel selected in the same manner described above. In this manner it is thought that the polling will degrade fairly as load increases and spare channel become scarce.

In the second case some determinism is being sacrificed for flexibility. However the determinism is not removed entirely since the channels for reply are provided it is just the manner in which the channels are filled is now different. Rather than providing a channel solely for a given mobile to reply on, the system is providing a group of channels any one of which the mobile could reply on.

In the GPRS/EDGE (General Packet Radio Service/Enhanced Data Rates for GPRS) standard the Packet Control Acknowledgement is sent in response to a Radio Resource (RR) message. RR messages are signalled to the mobile by setting the _{*payload*} _{*Type*} field in the MAC header to *control.* In the MAC header the RRBP (Relative Reserve Block Period) field is used to indicate to the mobile when it is expected to reply to the system with a Packet Control Acknowledgement signal. The Supplementary Polling (SP) bit indicates the validity of this field.

When GPRS/EDGE mobiles request a voice service they are placed into a polling group, if in their silence phase, or given a channel, if in their active phase. The RR messages that such mobiles would be interested in under these circumstances are reassignments of their channels when active. The design of the Multi-polling header allows for this in the reply fields (see Reply Encoding section above). For this reason the RRBP and SP fields can be removed from the Multi-polling header when more than one mobile is polled in a given time slot.

The CSN1 (Concrete Syntax Notation 1) coding for the multi-polling header is given below. The header length depends on the value of the first two bits in the header since their value selects the subsequent MAC structure. The definitions of the structures are also given below.

For the Single Mobile structure the MAC header is the same as it would be for a standard GPRS MAC header in so far as it includes the SP, RRBP and Payload Type fields.

For subsequent structures only the Payload Type is retained from the standard header. The reasoning for the removal of the Relative Reserved Block Period (RRPB) and Supplementary Polling (SP) bits has been given above. However, the Payload Type is necessary to be included since this signals an automatic response to Radio Resource (RR) control messaging.

The length of the polling code depends on the number of mobiles being polled. The explanation for this has been given in the Polling Code section above. The length of the reply field again depends on the number of mobile being polled. The explanation of the construction of the reply field is given in the Reply Encoding section.

The possible codes occupying the mode slot 10 in the header is as follows:
<00 : Single Mobile struct>
<01 : Two Mobile struct>
<10 : Three Mobile struct>
<11: Four Mobile struct>;
The codes occupying the slot 12 are as follows:
<Single mobile structure>
<POLLING CODE: bit(3)>
<S/P : bit(1)>
<RRPB : bit(2)>
<PAYLOAD TYPE : bit(2)>
<Spare Bits>;
Depending upon whether two, three or four mobiles are being polled, the slot 14 is occupied by one of the following three options:
<Two Mobile struct>::=
   <POLLING CODE: bit(5)>
   <PAYLOAD TYPE : bit(2)>
   {<Reply Field: Reply Field struct>*2}
   <Spare Bits>;
<Three Mobile struct>::=
   <POLLING CODE: bit(6)>
   <PAYLOAD TYPE : bit(2)>
   {<Reply Field: Reply Field struct>*3}
   <Spare Bits>;
<Four Mobile struct>::=
   <POLLING CODE: bit(7)>
   <PAYLOAD TYPE : bit(2)>
   {<Reply Field: Reply Field struct>*4}
   <Spare Bits>;
Finally, when using the two, three or four options, the slots 16 and 18 in the header are occupied by:
<Reply Field struct>::=
<USF_NEW: bit(3)>
<REPLY_TS:bit(3)>
<REPLY_FN: :bit(2)>;

## Claims

1. A data transmission system comprising a base station having a radio transmitter and a receiver and a plurality of satellite stations each having a radio transmitter and a receiver, the transmitter of the base station and the receivers of the satellite stations all being tuned to the same downlink channel, and the transmitters of the satellite stations and the receiver of the base station all being tuned to a common uplink channel and at least one auxiliary uplink channel, the base station including control means for generating a succession of data packets and transmitting them to the satellite station, each data packet comprising a header section and a payload section, the header section being of variable configuration and length and containing a first uplink state flag identifying with a first selected satellite stations which when received by the first selected satellite station causes that satellite station alone to send a data packet back to the base station along the uplink channel, and at least one second uplink state flag identifying a second selected satellite station coupled with the identity of and time slot for, a said auxiliary uplink channel to cause the said second selected satellite station alone to send a data packet back to the base station along said auxiliary uplink channel in said time slot, whereby to effect multi-polling of said satellite station using a single packet of data.

2. A data transmission system according to Claim 1, wherein control means is arranged to incorporate into the header of each said packet of data a code indicative of whether single polling, multi-polling or probabilistic multi-polling is required and wherein each said satellite station adapts itself to the requirement upon receipt of the code.

3. A data transmission system according to Claim 2, wherein when the header includes a code indicative of single polling, the control means is arranged to incorporate into the header of each said packet of data, a polling code of three bits, and S/P code of one bit and RRPB code of two bits and a payload type code of two bits.

4. A data transmission system according to Claim 2, wherein when the header of each packet of data includes a code indicative of multi-polling, the control means is arranged to incorporate into the header a polling code, a payload type code of two bits and a reply field : reply field structure code.

5. A data transmission system according to Claim 4, wherein when a number _{*x*} satellites are being polled the length of the polling code is (_{*x*} + 3) bits and the length of the reply field : reply structure code is _{*x*} bits.

6. A data transmission system according to Claim 5, wherein the control means is arranged to configure the header so that the reply field structure includes an USF of three bits, a reply time slot of two bits and a reply frequency of two bits.

7. A data transmission system according to any preceding claim, wherein each said satellite comprises a mobile telephone and said uplink and downlink channels form part of a radio telephone network.

8. A base station having a radio transmitter and a receiver for communication with a plurality of satellite stations, the transmitter being tuned to a predetermined downlink channel, and the receiver being tuned to a predetermined uplink channel and at least one auxiliary uplink channel, the base station including control means for generating a succession of data packets and transmitting them to the satellite stations, each data packet comprising a header section and a payload section, the header section being of variable configuration and length and containing a first uplink state flag identifying with a first selected satellite station and at least one second uplink state flag identifying a second selected satellite station coupled with the identity of and time slot for, a said auxiliary-uplink channel whereby to effect multi-polling of said satellite station using a single packet of data.

9. A base station according to Claim 8, wherein control means is arranged to incorporate into the header of each said packet of data, a code indicative of whether single polling, multi-polling or probabilistic multi-polling is required.

10. A base station according to Claim 9, wherein when the header includes a code indicative of single polling, the control means is arranged to incorporate into the header of each said packet of data, a polling code of three bits, and S/P code of one bit and RRPB code of two bits and a payload type code of two bits.

11. A base station according to Claim 9, wherein when the header of each packet of data includes a code indicative of multi-polling, the control means is arranged to incorporate into the header a polling code, a payload type code of two bits and a reply field : reply field structure code.

12. A base station according to Claim 11, wherein when a number _{*x*} satellites are being polled the length of the polling code is (_{*x*} + 3) bits and the length of the reply field : reply structure code is _{*x*} bits.

13. A base station according to Claim 12, wherein the control means is arranged to configure the header so that the reply field structure includes an USF of three bits, a reply time slot of two bits and a reply frequency of two bits.

14. A telephone network including a base station according to any one of Claims 8 to 13.

15. A satellite station with a unique identity having a radio transmitter and a receiver, the receiver being tuned to a predetermined downlink channel, and the transmitter being tuned to a predetermined uplink channel and at least one auxiliary uplink channel, the satellite station including control means for receiving from a base station a succession of data packets, each data packet comprising a header section and a payload section, the header section being of variable configuration and length and containing a first uplink state flag carrying the identity of a first selected satellite station which if that identity corresponds with the said unique identity causes the control means to send a data packet back to the base station along the predetermined uplink channel, and at least one second uplink state flag carrying the identity of a second selected satellite station coupled with the identity of and time slot for, a said auxiliary uplink channel which if that identity corresponds with said unique identity causes the control means to send a data packet back to the base station along said auxiliary uplink channel in said time slot, whereby said satellite station is multi-polled using a single packet of data.

16. A satellite station according to Claim 15, wherein the header of each said packet of data includes a code indicative of whether single polling, multi-polling or probabilistic multi-polling is required and wherein control means adapts itself to the requirement upon receipt of the code.

17. A satellite station according to Claim 16, wherein when the header includes a code indicative of single polling, the control means is arranged to incorporate into the header of each said packet of data, a polling code of three bits, and S/P code of one bit and RRPB code of two bits and a payload type code of two bits.

18. A mobile phone comprising a satellite station according to any one of Claims 14 to 16.
